# EUROPEAN PATENT SPECIFICATION

(11) **EP 1 442 360 B1**
(45) Date of publication and mention of the grant of the patent: **28.11.2007**
(21) Application number: 02800369.7
(22) Date of filing: 26.09.2002
(51) Int. Cl.: G06F 9/00, H04Q 7/00, H04Q 11/04, H04B 7/005, H04B 17/00, H04J 3/16

(54) **Burst detector**
Burstdetektor
Détecteur de rafales

(30) Priority: 28.09.2001 US 325692 P; 16.07.2002 US 196857
(43) Date of publication of application: 04.08.2004
(60) Divisional application: 07119183.7
(73) Proprietor: INTERDIGITAL TECHNOLOGY CORPORATION, Wilmington, DE 19810 (US)
(72) Inventor: DIFAZIO, Robert, A., Greenlawn, NY 11740 (US)
(74) Representative: Henningsson, Gunnar
(86) International application number: PCT/US2002/030661
(87) International publication number: WO 2003/030561

(56) References cited:
- EP-A- 0 665 530
- US-A- 5 579 319
- US-A- 5 666 358
- US-A- 5 724 657
- US-A- 6 154 659
- US-B1- 6 285 681
- US-B1- 6 393 276
- US-B1- 6 480 481
- "Universal Mobile Telecommunications System (UMTS); Physical Layer Procedures (TDD) (3GPP TS 25.224 version 4.1.0 Release 4); ETSI TS 125 224" ETSI STANDARDS, EUROPEAN TELECOMMUNICATIONS STANDARDS INSTITUTE, SOPHIA-ANTIPO, FR, vol. 3-R1, no. V410, June 2001 (2001-06), XP014008518 ISSN: 0000-0001

## Description

BACKGROUND

The present invention relates to the field of wireless communications. More specifically, the present invention relates to detecting codes in a communication signal in order to activate the receiver to process the signal.

European patent application having publication number EP 0 665 630 discloses a method and apparatus for improving sound quality in a digital cellular radio system receiver comprising a voice activity detector which uses an energy estimate to detect the presence of speech in a received speech signal in a noise environment. When no speech is present, the system attenuates the signal and inserts low pass filtered white noise. In addition, a set of high pass filters are used to filter the signal based upon the background noise level regardless of whether speech is present. Thus, a combination of signal attenuation with insertion of low pass filtered white noise during periods of non-speech, along with high pass filtering of the signal, improves sound quality when decoding speech which has been encoded in a noisy environment.

"Universal Mobile Telecommunications System (UMTS); Physical layer procedures (TDD)", 3GPP TS 25.224 version 4.1.0, release 4, ETSI TS 125 224, 2001-06, generally discloses Physical Layer Procedures in TDD mode of UTRA.

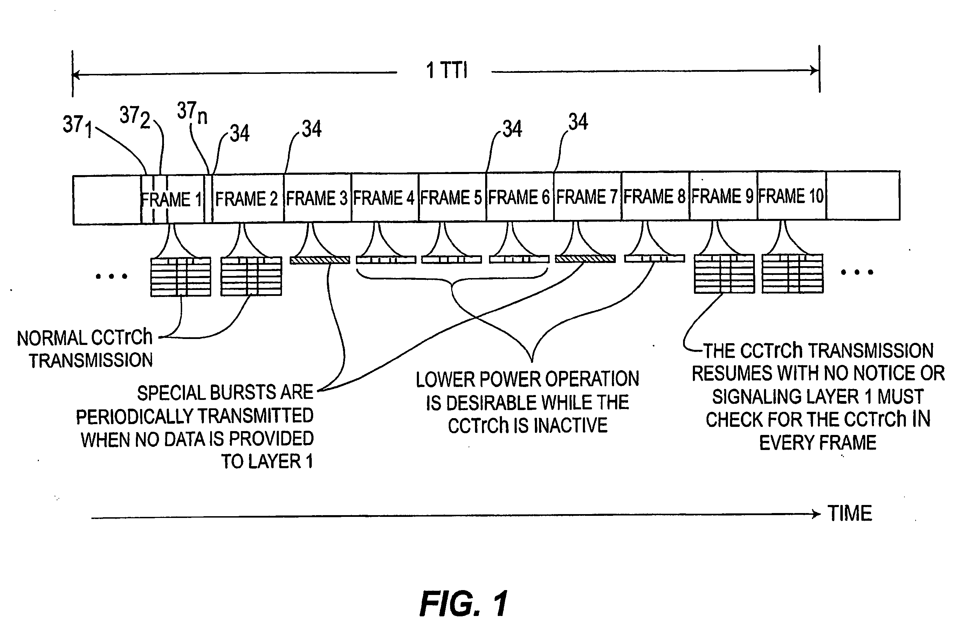

Spread spectrum TDD systems carry multiple communications over the same spectrum. The multiple signals are distinguished by their respective chip code sequences (codes). Referring to Figure 1, TDD systems use repeating transmission time intervals (TTIs), which are divided into frames 34, further divided into a number of timeslots 37₁-37ₙ, such as fifteen timeslots. In such systems, a communication is sent in a selected timeslot out of the plurality of timeslots 37₁-37ₙ using selected codes. Accordingly, one frame 34 is capable of carrying multiple communications distinguished by both timeslot and code. The combination of a single code in a single timeslot is referred to as a physical channel. A coded composite transport channel (CCTrCh) is mapped into a collection of physical channels, which comprise the combined units of data, known as resource units (RUs), for transmission over the radio interface to and from the user equipment (UE) or base station. Based on the bandwidth required to support such a communication, one or multiple CCTrChs are assigned to that communication.

The allocated set of physical channels for each CCTrCh holds the maximum number of RUs that would need to be transmitted during a TTI. The actual number of physical channels that are transmitted during a TTI are signaled to the receiver via the Transport Format Combination Index (TFCI). During normal operation, the first timeslot allocated to a CCTrCh will contain the required physical channels to transmit the RUs and the TFCI. After the receiver demodulates and decodes the TFCI it would know how many RUs are transmitted in a TTI, including those in the first timeslot. The TFCI conveys information about the number of RUs.

Figure 1 also illustrates a single CCTrCh in a TTI. Frames 1, 2, 9 and 10 show normal CCTrCh transmission, wherein each row of the CCTrCh is a physical channel comprising the RUs and one row in each CCTrCh contains the TFCI. Frames 3 - 8 represent frames in which no data is being transmitted in the CCTrCh, indicating that the CCTrCh is in the discontinuous transmission state (DTX). Although only one CCTrCh is illustrated in Figure 1, in general there can be multiple CCTrChs in each slot, directed towards one or more receivers, that can be independently switched in and out of DTX.

DTX can be classified into two categories : 1) partial DTX; and 2) full DTX. During partial DTX, a CCTrCh is active but less than the maximum number of RUs are filled with data and some physical channels are not transmitted. The first timeslot allocated to the CCTrCh will contain at least one physical channel to transmit one RU and the TFCI word, where the TFCI word signals that less than the maximum number of physical channels allocated for the transmission, but greater than zero (0), have been transmitted.

During full DTX, no data is provided to a CCTrCh and therefore, there are no RUs at all to transmit. Special bursts are periodically transmitted during full DTX and identified by a zero (0) valued TFCI in the first physical channel of the first timeslot allocated to the CCTrCh. The first special burst received in a CCTrCh after a normal CCTrCh transmission or a CCTrCh in the partial DTX state indicates the start of full DTX. Subsequent special bursts are transmitted every Special Burst Scheduling Parameter (SBSP) frames, wherein the SBSP is a predetermined interval. Frames 3 and 7 illustrate the CCTrCh comprising this special burst. Frames 4-6 and 8 illustrate frames between special bursts for a CCTrCh in full DTX.

As shown in Frame 9 of Figure 1, transmission of one or more RUs can resume at any time, not just at the anticipated arrival time of a special burst. Since DTX can end at any time within a TTI, the receiver must process the CCTrCh in each frame, even those frames comprising the CCTrCh with no data transmitted, as illustrated by Frames 4-6 and 8. This requires that the receiver operate at high power in order to process the CCTrCh for each frame, regardless of its state.

Receivers are able to utilize the receipt of subsequent special bursts to indicate that the CCTrCh is still in the full DTX state. Detection of the special burst, though, does not provide any information as to whether the CCTrCh will be in the partial DTX state or normal transmission state during the next frame.

Support for DTX has implications to several receiver functions, notably code detection. If no codes are sent in the particular CCTrCh in one of its frames, the code detector may declare that multiple codes are present, resulting in a Multi-User Detector (MUD) executing and including codes that were not transmitted, reducing the performance of other CCTrChs that are also processed with the MUD. Reliable detection of full DTX will prevent the declaring of the presence of codes when a CCTrCh is inactive. Also, full DTX detection can result in reduced power dissipation that can be realized by processing only those codes that have been transmitted and not processing empty timeslots.

Accordingly, there exists a need for an improved receiver.

SUMMARY

The present invention is a receiver as described in independent claims 1, 16.

The present invention is also a method for monitoring communication signals as described in independent claim 20.

BRIEF DESCRIPTION OF THE DRAWING(S)

Figure 1 illustrates an exemplary repeating transmission time interval (TTI) of a TDD system and a CCTrCh.

Figure 2 is a block diagram of a receiver in accordance with the preferred embodiment of the present invention.

Figure 3 is a block diagram of the burst detector in accordance with the preferred embodiment of the present invention.

Figures 4A and 4B are a flow diagram of the operation of the receiver in activating and deactivating the burst detector of the present invention.

Figure 5 is a block diagram of a first alternative embodiment of the burst detector of the present invention.

Figure 6 is a second alternative embodiment of the burst detector of the present invention.

Figure 7 is a third alternative embodiment of the burst detector of the present invention.

Figure 8 is a fourth alternative embodiment of the burst detector of the present invention.

Figure 9 is a fifth alternative embodiment of the burst detector of the present invention.

Figure 10 is a sixth alternative embodiment of the burst detector of the present invention.

Figure 11 is a block diagram of an application of the burst detector of the present invention.

Figure 12 is a block diagram of an alternate use for the burst detector of the present invention.

DETAILED DESCRIPTION OF THE PREFERRED EMBODIMENT(S)

The preferred embodiments will be described with reference to the drawing figures where like numerals represent like elements throughout.

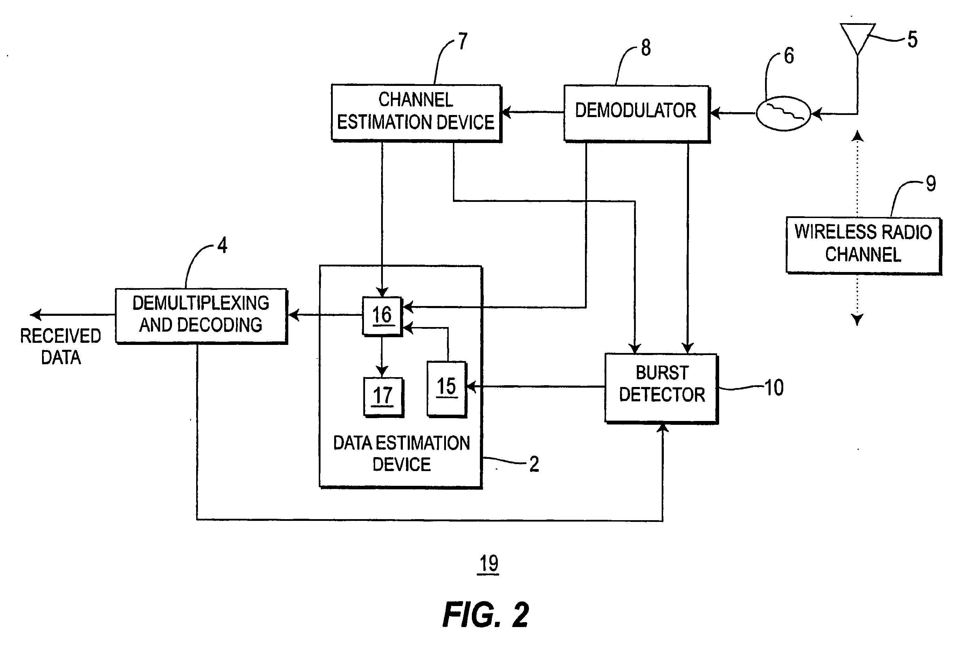

Referring to Figure 2, a receiver, preferably at a user equipment (UE) 19, mobile or fixed, comprises an antenna 5, an isolator or switch 6, a demodulator 8, a channel estimation device 7, a data estimation device 2, a burst detector 10, and demultiplexing and decoding device 4. Although the receiver will be disclosed at a UE, the receiver may also be located at a base station.

The receiver 19 receives various radio frequency (RF) signals including communications over the wireless radio channel using the antenna 5, or alternatively an antenna array. The received signals are passed through a transmit/receive (T/R) switch 6 to a demodulator 8 to produce a baseband signal. The baseband signal is processed, such as by the channel estimation device 7 and the data estimation device 2, in the timeslots and with the appropriate codes assigned to the receiver 19. The channel estimation device 7 commonly uses the training sequence component in the baseband signal to provide channel information, such as channel impulse responses. The channel information is used by the data estimation device 2 and the burst detector 10. The data estimation device 2 recovers data from the channel by estimating soft symbols using the channel information. Figure 2 shows one burst detector, however, a receiver may have multiple burst detectors to detect the reception of more than one code. Multiple burst detectors would be used, for example, when multiple CCTrChs are directed towards one receiver.

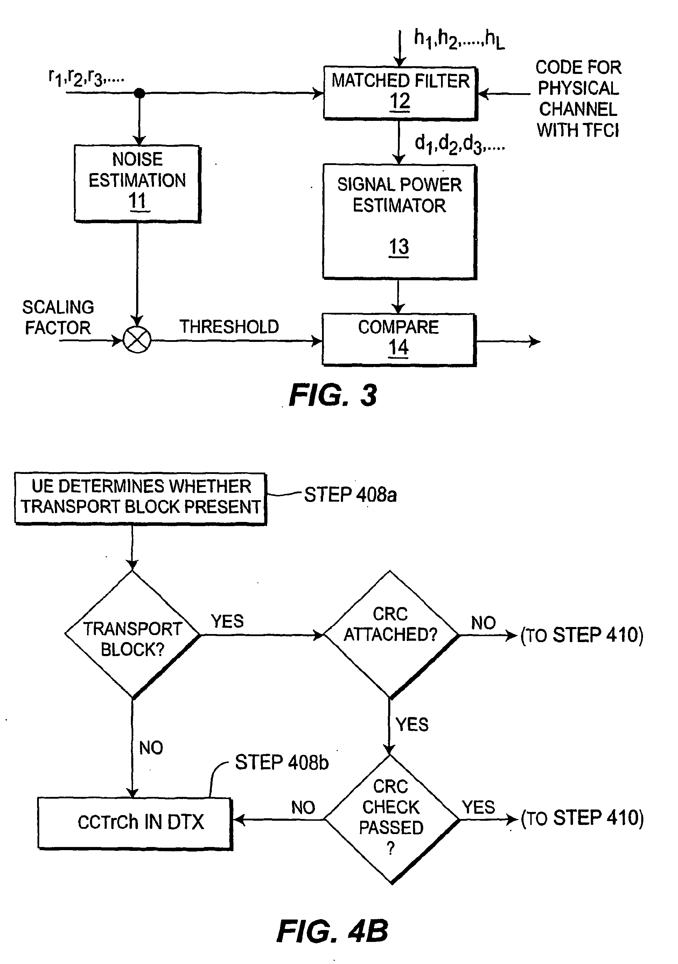

Figure 3 is a block diagram of the burst detector 10 in accordance with the preferred embodiment of the present invention. The burst detector 10 comprises a noise estimator 11, a matched filter 12, a signal power estimator 13, and a comparator 14. The received and demodulated communication is forwarded to the matched filter 12 and the noise estimator 11. The noise estimator 11 estimates the noise power of the received signal. The noise power estimate may use a predetermined statistic, such as the root-mean square value of the input samples, or other methods to approximate noise, interference, or total power. The noise power estimate is scaled by a predetermined scaling factor, generating a threshold value, which is forwarded to the comparator 14.

The received and demodulated communication is also forwarded to the matched filter 12, as well as, the channel impulse response from the channel estimation device 7. The matched filter 12 is coupled to a signal power estimator 13 and a channel estimation device 7. Although a matched filter 12 is shown in Figure 3 and described herein, any device which demodulates a particular code in the received signal can be utilized, such as a rake receiver 19. The matched filter 12 also receives the code for the physical channel carrying the TFCI for the particular CCTrCh. Utilizing the three inputs, the matched filter 12 computes soft bit or symbol decisions for the physical channel carrying the TFCI for the CCTrCh. The soft decisions are then forwarded to the signal power estimator 13.

The signal power estimator 13, coupled to the matched filter 12 and the comparator 14, receives the output of the matched filter 12 and estimates the signal power of the soft decisions in the received communication. As those skilled in the art know, a method of estimating the signal power is to separate the real and imaginary parts of the outputs of matched filter 12 and calculate the power therefrom. Any method of signal power estimation, though, may be used by the signal power estimator 13. Once the signal power estimator 13 determines the signal power of the soft decisions in the received communication, it is forwarded to the comparator 14.

The comparator 14 is coupled at its inputs to the signal power estimator 13 and the noise power estimator 11, and at its output to the data estimation device 2. The comparator 14 compares the scaled noise power and the signal power and the result of the comparison is used to indicate whether the particular CCTrCh is still in full DTX. For purposes of this disclosure, DTX will be indicative of the full DTX state discussed hereinabove. If the scaled estimated noise power is greater than the estimated signal power for the particular code carrying the TFCI in the first timeslot allocated to the CCTrCh in a frame, the comparator 14 outputs a signal to the data estimation device 2 indicating that no data was sent for the particular CCTrCh. This results in the data estimation device 2 not operating to demodulate the particular CCTrCh.

If the estimated signal power for the particular code carrying the TFCI in the first timeslot allocated to the CCTrCh in a frame is greater than the scaled estimated noise power, the comparator 14 outputs a signal, to the data estimation device 2 indicating that the end of DTX has been detected, which results in the data estimation device activating the CCTrCh.

In the description above, the comparison between the scaled noise power and the estimated signal power is limited to the particular code carrying the TFCI since if any codes are transmitted then the code carrying the TFCT will be among them. As those skilled in the art know, the comparison can use other received codes allocated to the CCTrCh. If the estimated signal power is greater than the scaled noise power for any particular code, the comparator 14 outputs a signal to the data estimation device 2. The data estimation device 2 can then activate demodulation of the code. Alternatively, it can be activated to demodulate the CCTrCh.

The data estimation device 2, coupled to the demodulator 8, burst detector 10, the channel estimation device 7, and the data demultiplexing and decoding device 4, comprises a code detection device (CDD) 15, a MUD 16, and a TFCI decoder 17. The MUD 16 decodes the received data using the channel impulse responses from the channel estimation device 7 and a set of channelization codes, spreading codes, and channel offsets from the CDD. As those skilled in the art know, the MUD 16 may utilize any multi-user detection method to estimate the data symbols of the received communication, a minimum mean square error block linear equalizer (MMSE-BLE), a zero-forcing block linear equalizer (ZF-BLE) or the use of a plurality of joint detectors, each for detecting one of the plurality of receivable CCTrChs associated with the UE 19.

The CDD 15, coupled to the MUD 16 and the burst detector 10, provides the MUD 16 with the set of codes for each of the plurality of received CCTrChs associated with the receiver 19. If the burst detector 10 indicates that the end of DTX state has been detected, the CDD 15 generates the code information and forwards it to the MUD 16 for decoding of the data. Otherwise, the CDD 15 does nothing with the particular CCTrCh.

Once the MUD 16 has decoded the received data, the data is forwarded to the TFCI decoder 17 and the data demultiplexing and decoding device 4. As those skilled in the art know, the TFCI decoder 17 outputs the maximum-likelihood set of TFCI information bits given the received information. When the value of the TFCI decoder 17 is equal to zero (0), a special burst has been detected, indicating the CCTrCh is beginning DTX or remains in the DTX state.

As stated above, the data estimation device 2 forwards the estimated data to the data demultiplexing and decoding device 4. The demultiplexing and decoding device 4, coupled to the data estimation device 2, detects the received signal to interference ratio (SIR) of the particular CCTrCh or the code carrying the TFCI in the CCTrCh. If the value of the SIR is greater than a predetermined threshold, the end of DTX detected by the burst detector 10 is validated. If the SIR is below the threshold, then a false detection has occurred, indicating that the particular CCTrCh is still in the DTX state. The data demultiplexing and decoding may include error detection on the data which acts as a sanity check for the burst detector 10, reducing the effect of false detections by the UE receiver 19.

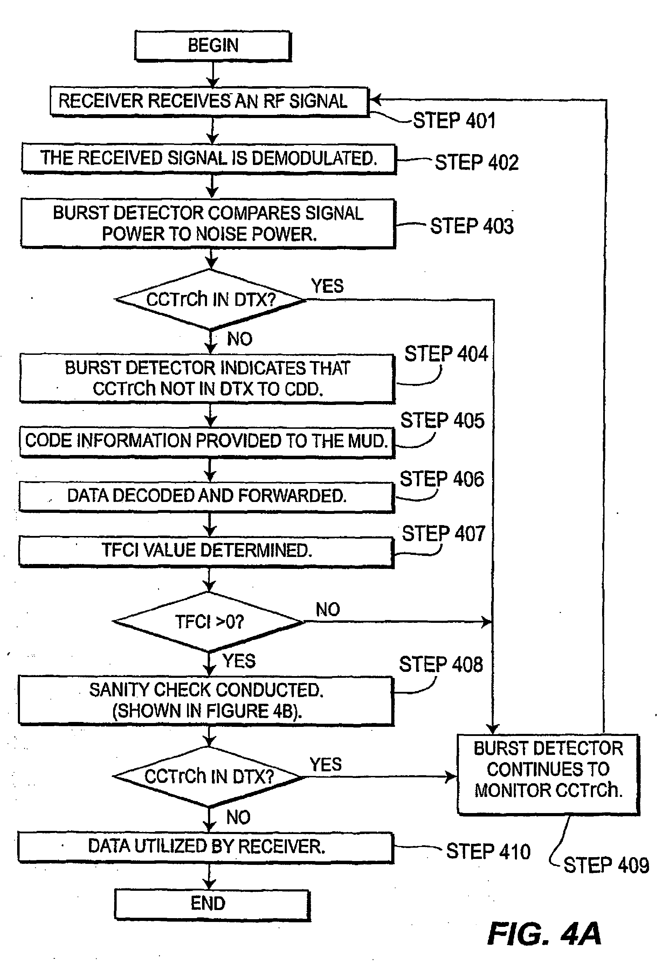

The flow diagram of the operation of the receiver in accordance with the preferred embodiment of the present invention are illustrated in Figures 4A and 4B. After synchronization of the UE to a base station and assuming the previously received frame included a special burst, the UE receiver 19 receives a plurality of communications in an RF signal (Step 401) and demodulates the received signal, producing a baseband signal (Step 402). For each of the CCTrChs associated with the UE, the burst detector 10 determines whether there are any symbols within a particular CCTrCh by comparing the estimated noise power to the estimated signal power (Step 403).

If the burst detector 10 indicates to the CDD 15 that the CCTrCh is in the DTX state, the burst detector 10 continues to monitor the CCTrCh (Step 409). Otherwise, the burst detector indicates to the CDD 15 that the CCTrCh is not in the DTX state (Step 404). The CDD 15 then provides the MUD 16 with the code information for the particular CCTrChs associated with the UE (Step 405). The MUD 16 processes the received CCTrCh and forwards the data symbols to the TFCI decoder 17 and the data demultiplexing and decoding device 4 (Step 406). The TFCI decoder 17 processes the received data symbols to determine the TFCI value (Step 407). If the TFCI value is zero (0), the special burst has been detected and a signal is then sent to the burst detector 10 to continue to monitor the CCTrCh (Step 409), indicating that the CCTrCh is in, or still in, the full DTX state.

If the TFCI value is greater than zero (0), and a CCTrCh is currently in the full DTX state, then the UE performs a sanity check on the received data using information provided by the data demultiplexing and decoding device 4 (Step 408). Referring to Figure 4B, when conducting the sanity check the UE first determines whether at least one transport block has been received in the associated CCTrCh (Step 408a). If there are no transport blocks received, the UE remains in full DTX (Step 408b). If there is at least one transport block, the data demultiplexing and decoding device 4 determines whether at least one of the detected transport blocks has a CRC attached. If not, then the data in the CCTrCh is accepted as valid and utilized by the UE (Step 410). If there is a CRC attached, then the data demultiplexing and decoding device 4 determines whether at least one transport block has passed the CRC check. If at least one has passed, then the data in the CCTrCh is accepted as valid and utilized by the UE (Step 410). Otherwise, the UE determines that the particular CCTrCh remains in the full DTX state (Step 408b).

If the sanity check determines that a CCTrCh is in the full DTX state, then an output signal is sent to the burst detector 10 indicating that the burst detector 10 should continue to monitor the CCTrCh to determine when full DTX ends and supply an output to the code detection device 15. If the DTX control logic determines that a CCTrCh is not in the full DTX state then it outputs a signal to the burst detector 10 indicating that it should not monitor the CCTrCh and the decoded data is utilized by the UEs (Step 410).

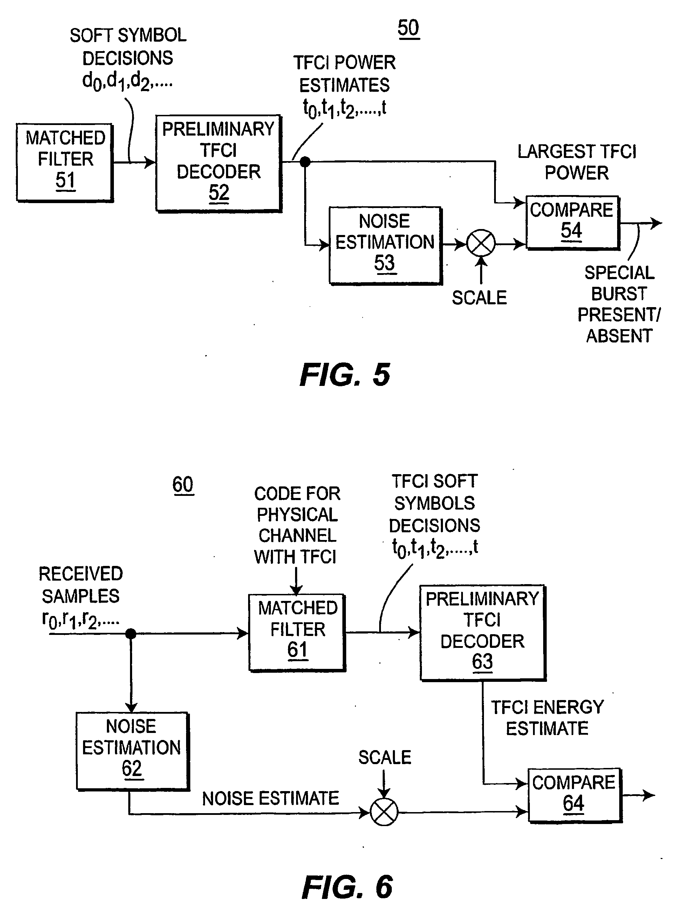

An alternative embodiment of the burst detector 50 of the present invention is illustrated in Figure 5. This alternative detector 50 comprises a matched filter 51, a preliminary TFCI decoder 52, a noise estimator 53, and a comparator 54. This detector 50 operates similar to the detector 10 disclosed in the preferred embodiment. The matched filter 51 receives the demodulated received signal from the demodulator 8 and forwards the soft symbol decisions to the preliminary TFCI decoder 52. Similar to the TFCI decoder 17 disclosed hereinabove, the preliminary TFCI decoder 52, coupled to the comparator 54 and the noise estimator 53, computes power estimates for each possible TFCI word. The largest TFCI power estimate is then forwarded to the comparator 54 and all power estimates are forwarded to the noise estimator 53.

The noise estimator 53, coupled to the TFCI decoder 52, and the comparator 54, receives the decoded TFCI power and the largest TFCI power and calculates a predetermined statistic, such as the root-mean-square of all inputs. The statistic provides an estimate of the noise that the TFCI decoder 52 is subject to. The noise estimate is scaled and forwarded to the comparator 54 for comparison to the largest TFCI power from the TFCI decoder 52.

The comparator 54, coupled to the TFCI decoder 52 and the noise estimator 53, receives the largest TFCI power and the scaled noise estimate and determines the greater of the two values. Similar to the preferred embodiment, if the estimated TFCI power is greater than the scaled noise estimate, the burst detector 50 signals to the data estimation device 2, which activates the CCTrCh demodulation of the particular CCTrCh associated with the UE. Otherwise, the burst detector 50 signals to the data estimation device 2 that the CCTrCh remains in the DTX state.

A second alternative embodiment of the burst detector is illustrated in Figure 6. Similar to the detector 50 illustrated in Figure 5 and disclosed above, this alternative burst detector 60 comprises a matched filter 61, a preliminary TFCI decoder 63, a noise estimator 62, and a comparator 64. The difference between this embodiment and the previous embodiment is that the noise estimator 62 receives the demodulated received signal before the matched filter 61 determines the soft symbols. The noise estimator 62, coupled to the demodulator 8 and the comparator 64, receives the demodulated received signal and calculates a noise estimate as in the preferred embodiment 11 shown in Figure 3. The calculated statistic is then the noise estimate of the received signal.

The operation of this second alternative is the same as the previous alternative. The matched filter 61 receives the demodulated received signal, determines the soft symbols of the CCTrCh using the first code for the particular CCTrCh and forwards the soft symbols to the TFCI decoder 63. The TFCI decoder 63 decodes the received soft symbols to produce a decoded TFCI word. An estimate of the power of the decoded TFCI word is then generated by the decoder and forwarded to the comparator 64. The comparator 64 receives the power estimate for the decoded TFCI word and a scaled noise estimate from the noise estimator 62 and determines which of the two values is greater. Again, if the estimated power of the TFCI word is greater than the scaled noise estimate, the burst detector 60 signals to the data estimation device 2 that data has been transmitted in the particular CCTrCh associated with the receiver 19, indicative of the end of DTX state or the transmission of the special burst.

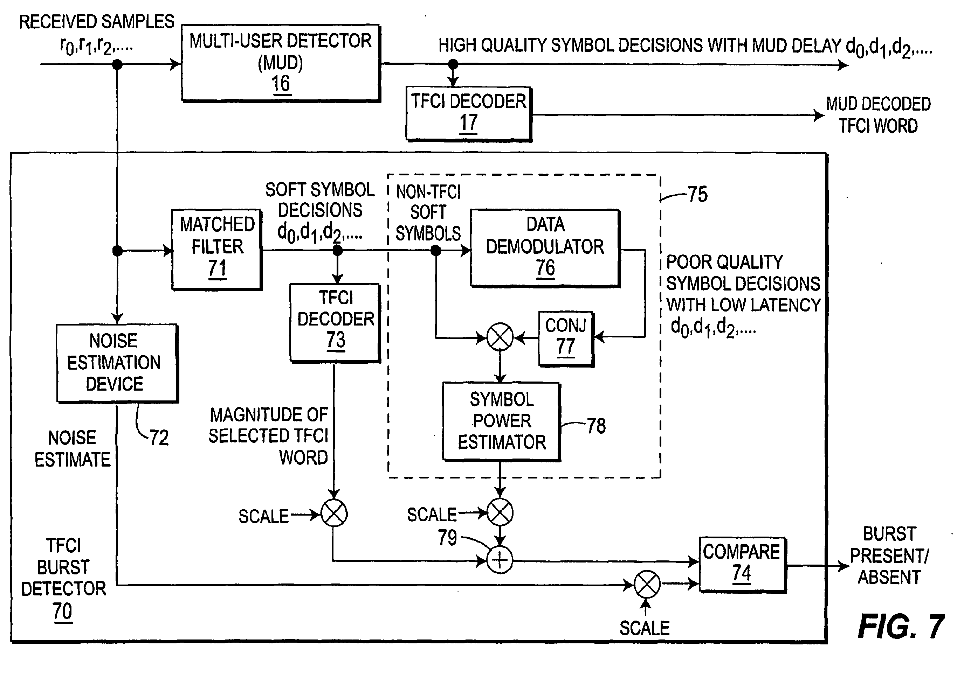

A third alternative embodiment of the burst detector is illustrated in Figure 7. As shown, this alternative detector 70 is the same as the second alternative except that an additional Decision Feedback Accumulation loop 75 is added. This loop 75 is coupled to the matched filter 71 and an adder 79 and comprises a data demodulator 76, a conjugator 77, and a symbol power estimator 78. The soft symbols output from the matched filter 71 are forwarded to the demodulator 76 of the loop 75, which generates symbol decisions with low latency. Each of the low latency symbol decisions are conjugated by the conjugator 77 and combined with the soft symbols output by the matched filter 71. The combined symbols are then forwarded to the symbol power estimator 78 where a power estimate of the combined symbols is generated and scaled by a predetermined factor and forwarded to the adder 79.

The adder 79, coupled to the symbol power estimator 78, the TFCI decoder 73 and the comparator 74, adds a scaled TFCI power estimate from the TFCI decoder 73 and the scaled symbol power estimate from the symbol power estimator 78, then forwards the summed power estimate to the comparator 74 for comparison to the noise estimate. A determination is then made as to whether data has been transmitted in the CCTrCh. This third alternative embodiment improves the performance of the burst detector 70 with a TFCI detector in those cases where the power estimate of the TFCI word is too low for a reliable determination of the state of the CCTrCh.

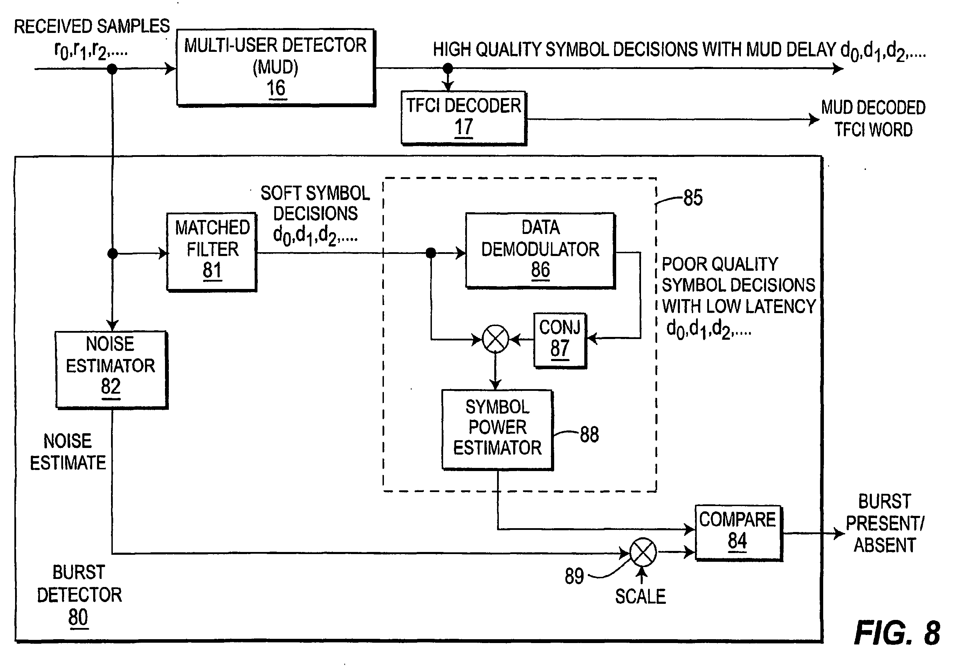

A fourth alternative embodiment of the burst detector of the present invention is illustrated in Figure 8. This alternative detector 80 eliminates the TFCI decoder 73 of the alternative illustrated in Figure 7. The advantage of eliminating the TFCI decoder 73 is that the burst detector 80 requires less signal processing. The comparator 84 for this alternative, then, compares the noise estimate to the symbol power estimate to determine whether the particular CCTrCh associated with the UE comprises data.

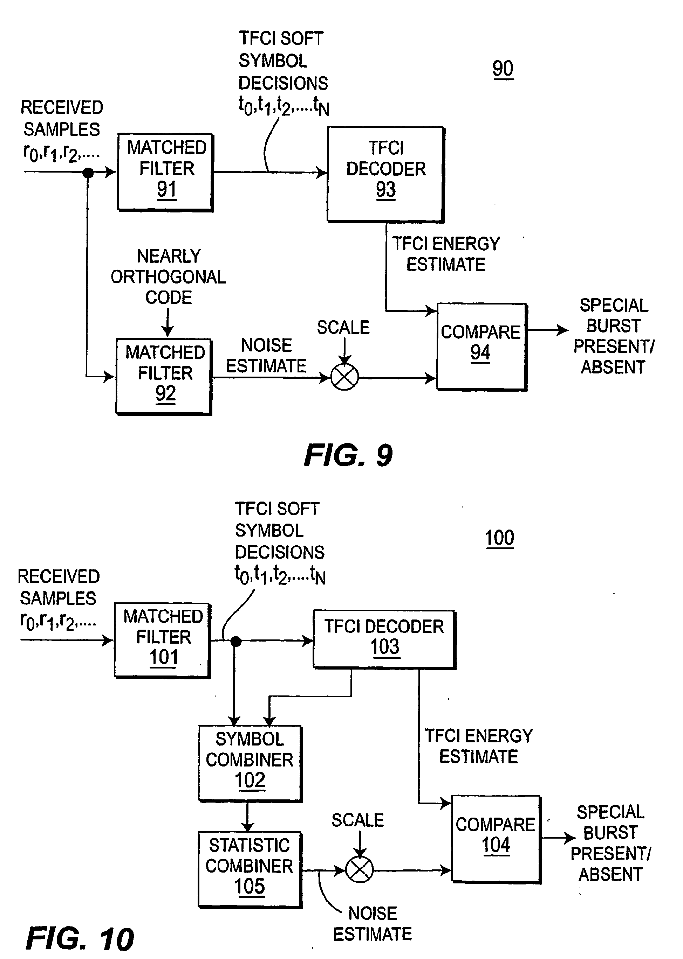

A fifth alternative embodiment of the burst detector of the present invention is illustrated in Figure 9. This alternative burst detector 90 comprises a first and second matched filter 91, 92, a TFCI decoder 93 and a comparator 94. As shown in Figure 9, the burst detector 90 is similar to the alternative detector 60 illustrated in Figure 6. The TFCI decoder 93 generates an energy estimate of the decoded TFCI word from the soft symbols output by the first matched filter 91. This energy estimate is forwarded to the comparator 94 for comparison to a scaled noise estimate. The noise estimate in this alternative burst detector 90 is generated by the second matched filter 92.

The second matched filter 92, coupled to the demodulator 8 and the comparator 94, receives the demodulated received signal and generates a noise estimate using a 'nearly' orthogonal code. The 'nearly' orthogonal codes are determined by selecting codes that have low cross correlation with the subset of orthogonal codes used in a particular timeslot where the associated CCTrCh is located. For those systems that do not use all of their orthogonal codes in a timeslot, the 'nearly' orthogonal code could be one of the unused orthogonal codes. For example, in a 3GPP TDD or TD-SCDMA system there are 16 OVSF codes. If less than all 16 OVSF codes are used in a timeslot, then the 'nearly' orthogonal code would equal one of the unused OVSF codes. The noise estimate generated by the second matched filter 92 is scaled by a predetermined factor and forwarded to the comparator 94.

A sixth alternative embodiment of the burst detector of the present invention is illustrated in Figure 10. Again, this alternative burst detector 100 is similar to that which is disclosed in Figure 6. Similar to the fifth alternative burst detector 60, an alternate method of generating a noise estimate is disclosed. In this alternative, a symbol combiner 102, coupled to the matched filter 101, TFCI decoder 103 and statistic combiner 105, is used to generate the noise estimate. The soft symbols from the matched filter 101 are forwarded to the symbol combiner 102, as well as, the TFCI word generated by the TFCI decoder 103. The symbol combiner 102 generates a set of statistics by combining the soft symbols, excluding from the set a statistic provided by the TFCI decoder 103 representing the decoded TFCI word, and forwards the set to the statistic combiner 105. The statistic combiner 105 combines the statistics from the symbol combiner 102, resulting in a noise estimate. The noise estimate is then scaled and forwarded to the comparator 104 for comparison against the power estimate of the TFCI word from the TFCI decoder 103.

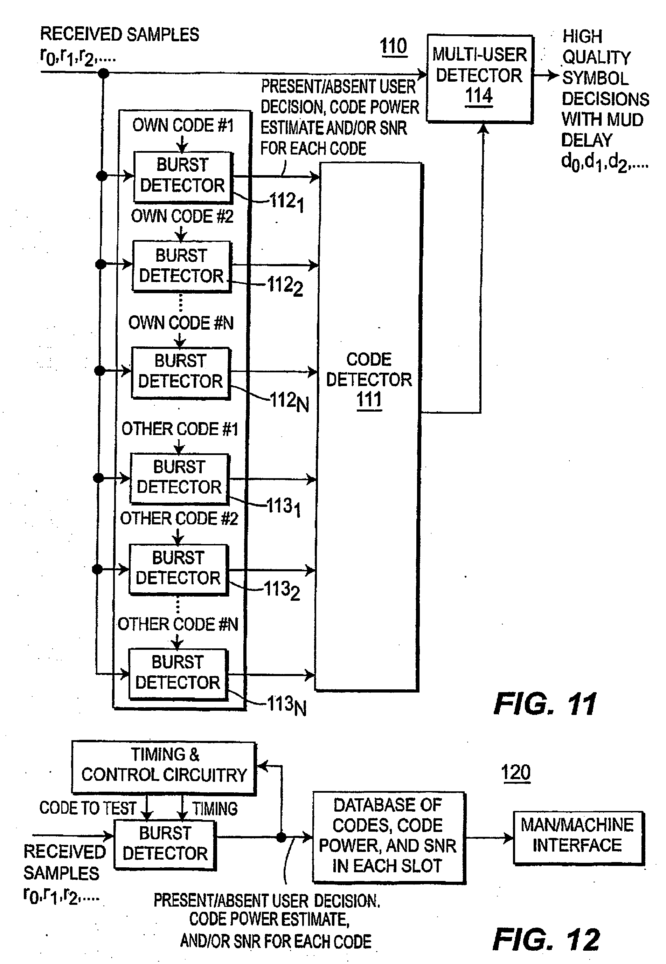

Figure 11 is a block diagram of a receiver 110 comprising a CDD 111 which uses a plurality of burst detectors 112₁...112ₙ, 113₁...113ₙ to generate the codes to be forwarded to the MUD 114. Each burst detector 112₁...112ₙ, 113₁,...113ₙ outputs a signal to the CDD 111 indicating whether the code has been received in the burst. The CDD 111 uses these inputs to provide the MUD 114 with the set of codes associated with the received signal. It should be noted that the burst detector of any of the embodiments of the present invention can be used to detect the presence of codes in general. The burst detector is not limited to only detecting the end of DTX state of a particular CCTrCh.

Figure 12 illustrates an alternate use for the burst detector of the present invention. As shown in Figure 12, the burst detector may be used to monitor power, signal to noise ratio (SNR) and the presence of codes at a receiver that is not intended to have access to the underlying transmitted information. For example, this information can be used for cell monitoring applications. The output of the noise estimator 11 and the signal power estimator 13 are output from the burst detector for each code that is tested. The database maintains a history of the measurements and can compute and store the signal to noise ratio (SNR). This data can then be used to determine which, if any, codes are active in a cell.

The burst detector of the present invention provides a receiver with the ability to monitor the received signal to determine if a particular CCTrCh associated with the UE has reached the end of full DTX state. In particular, this ability is provided before the data estimation, avoiding the need for the data estimation device to process a large number of codes that may not have been transmitted. This results in a reduction in unnecessary power dissipation during full DTX by not operating the MUD (or other data estimation device) on the particular CCTrCh in the full DTX state. In the case where a CCTrCh is allocated physical channels in multiple timeslots in a frame, and the burst detector has indicated that DTX has not ended, the full receiver chain can remain off during the second and subsequent timeslots in a frame saving significantly more power.

The burst detector also results in better performance by eliminating the occurrence of the filling of the MUD with codes that were not transmitted, which reduces the performance of the CCTrChs associated with the UE. To simplify implementation, code detection devices often assume that at least one code has been transmitted and employ relative power tests to select the set of codes to output to the MUD. If no codes are transmitted for CCTrCh, such as during full DTX, a code detection device may erroneously identify codes as having been transmitted leading to poor performance. By determining whether full DTX is continuing and providing the information to the code detection device, the burst detector allows use of simpler code detection algorithms. Multiple burst detectors can be used in parallel (Figure 11) to provide further input to a code detection device enabling further simplifications therein.

While the present invention has been described in terms of the preferred embodiment, other variations which are within the scope of the invention as outlined in the claims below will be apparent to those skilled in the art.

## Claims

1. A receiver (19) for receiving communication signals in time frames divided into a plurality of timeslots, wherein each timeslot may include data for a plurality of channels, said receiver being adapted to detect when a particular timeslot of said plurality of timeslots is received, said receiver includes a burst detector (10) comprising:
a noise power estimation device (11) for determining a scaled noise power estimate of a signal received in said particular timeslot;
a matched filter (12) for detecting a predetermined code within said signal received in said particular timeslot;
a signal power estimation device (13), responsive to said matched filter, for generating a signal power estimate of said signal comprising said detected code; and
a comparator (14), responsive to said noise power estimation and said signal power estimation devices, for generating a burst detection signal when said signal power estimate is greater than said scaled noise power estimate; said receiver further comprising:
a data estimation device (2) for decoding said received signal of said particular timeslot when said burst detection signal is generated.

2. The receiver of claim 1 wherein said data estimation device comprises:
a code detection device (15) for generating code information in response to said burst detection signal;
a first decoder (16) for decoding said received signal in response to said code information received from said code detection device; and
a transport format combination index, TFCI, decoder (17), coupled to said first decoder, for detecting a TFCI signal in said decoded received signal.

3. The receiver of claim 2, wherein said code information comprises channelization codes.

4. The receiver of claim 2 or 3, wherein said code information comprises spreading codes.

5. The receiver of claim 2 further comprising a demultiplexer (4) responsive to said data estimation device (2), for verifying that said particular timeslot includes channel data and generating a monitoring signal when said channel data is present.

6. The receiver of claim 5 wherein said burst detector (10) is arranged to cease detecting said received signal when said monitoring signal is generated and said TFCI signal indicating that one or more of said plurality of channels have been received in said particular timeslot.

7. The receiver of claim 6 wherein said burst detector (10) is arranged to continue to detect said received signal when said TFCI signal indicates that none of said plurality of channels have been received in said particular timeslot.

8. The receiver of claim 1 wherein said plurality of channels are configured such that they are allocated to one or more coded composite transport channels, CCTrChs; a particular CCTrCh being associated with said receiver.

9. The receiver of claim 8 wherein said data estimation device (2) comprises:
a code detection device (15) for generating code information in response to said burst detection signal;
a first decoder (16) for decoding said received signal in response to said code information received from said code detection device; and
a transport format combination index, TFCI, decoder (17), coupled to said first decoder for detecting a TFCI signal in said decoded received signal.

10. The receiver of claim 9, wherein said code information comprises channelization codes.

11. The receiver of claim 9 or 10, wherein said code information comprises spreading codes.

12. The receiver of claim 9 further comprising a demultiplexer (4) responsive to said data estimation device (2), for verifying that said particular CCTrCh includes channel data and generating a monitoring signal when said channel data is present.

13. The receiver of claim 12 wherein said burst detector (10) is arranged to cease detecting said received signal when said monitoring signal is generated and said TFCI signal indicating that one or more of said plurality of channels have been received in said particular CCTrCh.

14. The receiver of claim 13 wherein said burst detector (10) is arranged to continue to detect said received signal when said TFCI signal indicates that none of said plurality of channels have been received in said particular CCTrCh.

15. The receiver of claim 9 further including a plurality of burst detectors (10), each associated with at least one of a plurality of CCTrChs, for detecting reception of more than one code.

16. A receiver (19) for receiving communication signals in time frames divided into a plurality of timeslots, wherein each timeslot may include data for a plurality of channels, said receiver being adapted to detect when a particular timeslot of said plurality of timeslots is received, said receiver includes a burst detector (10) comprising:
a matched filter (51) for detecting a predetermined code within said signal received in said particular timeslot;
a preliminary transport format combination index, TFCI, decoder (50) responsive to said matched filter (51) for determining TFCI power estimates for each of a plurality of TFCI words in said received signal; and
a noise power estimation device (53) for determining a scaled noise power estimate of said signal received in said particular timeslot by using each of said TFCI power estimates;
said preliminary TFCI decoder being arranged to perform signal power estimation using a largest of said TFCI power estimates to generate said signal : power estimate; and
a comparator (54), responsive to said noise power estimation and said, signal power estimation devices, for generating a burst detection signal when said signal power estimate is greater than said scaled noise power estimate; said receiver further comprising:
a data estimation device (2) for decoding said received signal of said particular timeslot when said burst detection signal is generated.

17. The receiver of claim 1 wherein said signal power estimation device (13) comprises:
a transport format combination index decoder (73), TFCI, for determining a TFCI power estimate of a selected TFCI word in said received signal;
a decision feed back loop (75) for determining a symbol power estimate of said received signal, comprising:
a demodulator (76) or generating symbol decisions;
a conjugator (77) coupled to said demodulator, for conjugating said symbol decisions; and
a symbol power estimator (78), responsive to said conjugated symbol decisions and outputs of said matched filter, for generating a symbol power estimate; and
said signal power estimate being the combination of said TFCI power estimate and said symbol power estimate.

18. The receiver of claim 1 wherein said signal power estimation device (13) comprises a decision feed back loop (85) for determining a symbol power estimate of said received signal, comprising:
a demodulator (86) for generating symbol decisions;
a conjugator (87) coupled to said demodulator, for conjugating said symbol decisions; and
a symbol power estimator (88), responsive to said conjugated symbol decisions and outputs of said matched filter, for generating a symbol power estimate; and
said signal power estimate being the symbol power estimate.

19. The receiver of claim 1 wherein said noise power estimation device (11) is a matched filter (92) or detecting a nearly orthogonal code within said received signal, a magnitude of said detected nearly orthogonal code being said scaled noise power estimate;
said signal power estimation device being a transport format combination index decoder (23) for determining a TFCI power estimate of a selected TFCI word in said received signal; and
said TFCI power estimate being said signal power estimate.

20. A method for monitoring communication signals in time frames divided into a plurality of timeslots in a receiver, wherein each timeslot may include data for a plurality of channels, and detecting when a particular timeslot of said plurality of timeslots is received, said method comprising the steps of:
1) determining a scaled noise power estimate of a signal received in said timeslot;
2) detecting a predetermined code within said signal received in said particular timeslot;
3) generating a signal power estimate of said signal comprising said detected code;
4) generating a burst detection signal when said signal power estimate is greater than said scaled noise power estimate; and
5) decoding said received signal of said particular timeslot when said burst detection signal is generated.

21. The method of claim 20 further comprising the steps of
6) generating code information in response to said burst detection signal, wherein said step 5) is responsive to said code information;
7) detecting a transport format combination index, TFCI, signal in said decoded received signal;
8) verifying that said particular timeslot includes channel data; and
9) generating a monitoring signal when said channel data is present in said particular timeslot.

22. The method of claim 21, said code information comprising channelization codes.

23. The method of claim 21 or 22, said code information comprising spreading codes.

24. The method of claim 21 wherein said steps 1) - 4) cease in response to said monitoring signal and said detected TFCI indicating that one or more of said plurality of channels have been received in said particular timeslot.

25. The method of claim 24 wherein said steps of 1) - 4) continue when said detected TFCI indicates that none of said plurality of channels have been received in said particular timeslot.

26. The method of claim 20 wherein said plurality of channels are allocated to one or more coded composite transport channels, CCTrCh, a particular CCTrCH being associated with said receiver.

27. The method of claim 26 further comprising the steps of:
generating code information in response to said burst detection signal, wherein said step 5) is responsive to said code information;
detecting a transport format combination index, TFCI, signal in said decoded received signal;
verifying that said particular CCTrCh includes channel data; and
generating a monitoring signal when said channel data is present in said particular CCTrCh.

28. The method of claim 27 wherein said steps 1) - 4) cease in response to said monitoring signal and said TFCI indicating that one or more of said plurality of channels have been received in said particular CCTrCh.

29. The method of claim 28 wherein said steps 1) - 4) continue when said TFCI indicates that none of said plurality of channels have been received in said particular CCTrCh.

30. The method of claim 20 wherein said step 3) comprises the steps of determining a largest TFCI power estimate out of a plurality of TFCI power estimates for a plurality of TFCI words in said received signal, said largest TFCI power estimate being said signal power estimate;
said step 1) uses said plurality of TFCI power estimates to generate said scaled noise power estimate.

31. The method of claim 20 wherein said step 3) comprises the steps of:
determining a transport format combination index, TFCI, power estimate of a selected TFCI word in said received signal;
determining a symbol power estimate of said received signal; and
combining said TFCI power estimate with said symbol power estimate to generate said signal power estimate.

32. The method of claim 20 wherein said step 3) comprises the steps of:
generating symbol decisions;
conjugating said symbol decisions; and
combining said conjugated symbol decisions and said detected predetermined code to generate said signal power estimate.

33. The method of claim 20 wherein said step 1) comprises the step of detecting a nearly orthogonal code within said received signal, a magnitude of said nearly orthogonal code being the noise power estimate;
said step 3) comprises the steps of determining a largest TFCI power estimate out of a plurality of TFCI power estimates for a plurality of TFCI words in said received signal, said largest TFCI power estimate being said signal power estimate.

## Patentansprüche

1. Empfänger (19) zum Empfangen von Kommunikationssignalen in Zeitrahmen, die in mehrere Zeitschlitze geteilt sind, wobei jeder Zeitschlitz Daten für mehrere Kanäle enthalten kann, wobei der Empfänger dazu geeignet ist, den Empfang eines spezifischen Zeitschlitzes der mehreren Zeitschlitze zu erfassen, wobei der Empfänger einen Burstdetektor (10) aufweist, mit:
einer Rauschleistungsschätzeinrichtung (11) zum Bestimmen eines skalierten Rauschleistungsschätzwertes eines in dem spezifischen Zeitschlitz empfangenen Signals;
einem angepassten Filter (12) zum Erfassen eines vorgegebenen Codes in dem in dem spezifischen Zeitschlitz empfangenen Signal;
einer auf das angepasste Filter ansprechenden Signalleistungsschätzeinrichtung (13) zum Erzeugen eines Signalleistungsschätzwertes des Signals, das den erfassten Code enthält; und
einem auf die Rauschleistungsschätzeinrichtung und die Signalleistungsschätzeinrichtung ansprechenden Vergleicher (14) zum Erzeugen eines Bursterfassungssignals, wenn der Signalleistungsschätzwert größer ist als der skalierte Rauschsignalleistungsschätzwert;
wobei der Empfänger ferner aufweist:
eine Datenschätzeinrichtung (2) zum Decodieren des Empfangssignals des spezifischen Zeitschlitzes, wenn das Bursterfassungssignal erzeugt wird.

2. Empfänger nach Anspruch 1, wobei die Datenschätzeinrichtung aufweist:
eine Codeerfassungselnrichtung (15) zum Erzeugen von Codeinformation in Antwort auf das Bursterfassungssignal;
einen ersten Decodierer (16) zum Decodieren des Empfangssignals in Antwort auf die von der Codeerfassungseinrichtung empfangene Codeinformation; und
einen mit dem ersten Decodierer verbundenen TFCI-(Transportformatkombinationsindex) Decodierer (17) zum Erfassen eines TFCI-Signals im decodierten Empfangssignal.

3. Empfänger nach Anspruch 2, wobei die Codeinformation Kanalisierungscodes enthält.

4. Empfänger nach Anspruch 2 oder 3, wobei die Codeinformation Spreizcodes enthält.

5. Empfänger nach Anspruch 2, ferner mit einem auf die Datenschätzeinrichtung (2) ansprechenden Demultiplexer (4) zum Verifizieren, dass der spezifische Zeitschlitz Kanaldaten enthält, und zum Erzeugen eines Überwachungssignals, wenn die Kanaldaten vorhanden sind.

6. Empfänger nach Anspruch 5, wobei der Burstdetektor (10) dazu geeignet ist, die Erfassung des Empfangssignals zu beenden, wenn das Überwachungssignal erzeugt wird und das TFCT-Signal anzeigt, dass einer oder mehrere der mehreren Kanäle in dem spezifischen Zeitschlitz empfangen worden sind.

7. Empfänger nach Anspruch 6, wobei der Burstdetektor (10) dazu geeignet ist, die Erfassung des Empfangssignals fortzusetzen, wenn das TFCI-Signal anzeigt, dass keiner der mehreren Kanäle in dem spezifischen Zeitschlitz empfangen worden ist.

8. Empfänger nach Anspruch 1, wobei die mehreren Kanäle derart konfiguriert sind, dass sie einem oder mehreren codierten kombinierten Transportkanälen (Coded Composite Transport Channels) CCTrCH zugeordnet sind, wobei dem Empfänger ein spezifischer CCTrCH zugewiesen ist.

9. Empfänger nach Anspruch 8, wobei die Datenschätzeinrichtung (2) aufweist:
eine Codeerfassungseinrichtung (15) zum Erzeugen von Codeinformation in Antwort auf das Bursterfassungssignal;
einen ersten Decodierer (16) zum Decodieren des Empfangssignals in Antwort auf die von der Codeerfassungseinrichtung empfangene Codeinformation; und
einen mit dem ersten Decodierer verbundenen TFCI-(Transportformatkombinationsindex) Decodierer (17) zum Erfassen eines TFCI-Signals im decodierten Empfangssignal.

10. Empfänger nach Anspruch 9, wobei die Codeinformation Kanalisierungscodes enthält.

11. Empfänger nach Anspruch 9 oder 10, wobei die Codeinformation Spreizcodes enthält.

12. Empfänger nach Anspruch 9, ferner mit einem auf die Datenschätzeinrichtung (2) ansprechenden Demultiplexer (4) zum Verifizieren, dass der spezifische CCTrCH Kanaldaten enthält, und zum Erzeugen eines Überwachungssignals, wenn die Kanaldaten vorhanden sind.

13. Empfänger nach Anspruch 12, wobei der Burstdetektor (10) dazu geeignet ist, die Erfassung des Empfangssignals zu beenden, wenn das Überwachungssignal erzeugt wird und das TFCI-Signal anzeigt, dass einer oder mehrere der mehreren Kanäle in dem spezifischen CCTrCh empfangen worden sind.

14. Empfänger nach Anspruch 13, wobei der Burstdetektor (10) dazu geeignet ist, die Erfassung des Empfangssignals fortzusetzen, wenn das TFCI-Signal anzeigt, dass keiner der mehreren Kanäle in dem spezifischen CCTrCh empfangen worden ist.

15. Empfänger nach Anspruch 9, ferner mit mehreren Burstdetektoren (10), die jeweils mindestens einem der mehreren CCTrChs zugeordnet sind, zum Erfassen des Empfangs von mehr als einem Code.

16. Empfänger (19) zum Empfangen von Kommunikationssignalen in Zeitrahmen, die in mehrere Zeitschlitze geteilt sind, wobei jeder Zeitschlitz Daten für mehrere Kanäle enthalten kann, wobei der Empfänger dazu geeignet ist, den Empfang eines spezifischen Zeitschlitzes der mehreren Zeitschlitze zu erfassen, wobei der Empfänger einen Burstdetektor (10) aufweist, mit:
einem angepassten Filter (51) zum Erfassen eines vorgegebenen Codes in dem in dem spezifischen Zeitschlitz empfangenen Signal;
einem auf das angepasste Filter (51) ansprechenden vorläufigen TFCI- (Transportformatkombinationsindex) Decodierer (50) zum Bestimmen von TFCI-Leistungsschätzwerten für jedes der mehreren TFCI-Wörter im Empfangsignal; und
einer Rauschleistungsschätzeinrichtung (53) zum Bestimmen eines skalierten Rauschleistungsschätzwertes des in dem spezifischen Zeitschlitz empfangenen Signals unter Verwendung jedes der TFCI-Leistungsschätzwerte;
wobei der vorläufige TFCI-Decodierer dazu geeignet ist, eine Signalleistungsschätzung unter Verwendung des größten der TFCI-veistungsschätzwerte auszuführen, um den Signalleistungsschätzwert zu erzeugen; und
einem auf die Rauschleistungsschätzeinrichtung und die Signalleistungsschätzeinrichtung ansprechenden Vergleicher (54) zum Erzeugen eines Burstertassungssignals, wenn der Signalleistungsschätzwert größer ist als der skalierte Rauschsignalleistungsschätzwert;
wobei der Empfänger ferner aufweist:
eine Datenschätzeinrichtung (2) zum Decodieren des Empfangssignals des spezifischen Zeitschlitzes, wenn das Bursterfassungssignal erzeugt wird.

17. Empfänger nach Anspruch 1, wobei die Signalleistungsschätzeinrichtung (13) aufweist:
einen TFCI- (Transportformatkombinationsindex) Decodierer (73) zum Bestimmen eines TFCI-Leistungsschätzwertes eines ausgewählten TCFI-Wortes im Empfangssignal;
eine Entscheidungsrückkopplungsschleife (75) zum Bestimmen eines Symbolleistungsschätzwertes des Empfangssignals, mit:
einem Demodulator (76) zum Erzeugen von Symbolentscheidungen;
einem mit dem Demodulator verbundenen Konjugator (77) zum Konjugieren der Symbolentscheidungen; und
einem auf die konjugierten Symbolentscheidungen und die Ausgangssignale des angepassten Filters ansprechenden Symbolleistungsschätzeinrichtung (78) zum Erzeugen eines Symbolleistungsschätzwertes;
wobei der Signalleistungsschätzwert eine Kombination aus dem TFCI-Schätzwert und dem Symbolleistungsschätzwert ist.

18. Empfänger nach Anspruch 1, wobei die Signalleistungsschätzeinrichtung (13) eine Entscheidungsrückkopplungsschleife (85) zum Bestimmen eines Symbolleistungsschätzwertes des Empfangssignals aufweist, mit:
einem Demodulator (86) zum Erzeugen von Symbolentscheidungen;
einem mit dem Demodulator verbundenen Konjugator (87) zum Konjugieren der Symbolentscheidungen; und
einer auf die konjugierten Symbolentscheidungen und die Ausgangssignale des angepassten Filters ansprechenden Symbolleistungsschätzeinrichtung (88) zum Erzeugen eines Symbolleistungsschätzwertes;
wobei der Signalleistungsschätzwert der Symbolleistungsschätzwert ist.

19. Empfänger nach Anspruch 1, wobei die Rauschleistungsschätzeinrichtung (11) ein angepasstes Filter (92) zum Erfassen eines nahen Orthogonalcodes im Empfangssignal ist, wobei eine Größe des nahen Orthogonalcodes der skalierte Rauschleistungsschätzwert ist;
wobei die Signalleistungsschätzeinrichtung ein TFCI- (Transportformatkombinationsindex) Decodierer (93) zum Bestimmen eines TFCI-Leistungsschätzwertes eines ausgewählten TFCI-Wortes im Empfangssignal ist; und
wobei der TFCI-Leistungsschätzwert der Signalleistungsschätzwert ist.

20. Verfahren zum Überwachen von Kommunikationssignalen in Zeitrahmen, die in mehrere Zeitschlitze geteilt sind, in einem Empfänger, wobei jeder Zeitschlitz Daten für mehrere Kanäle enthalten kann, und zum Erfassen, wenn ein spezifischer Zeitschlitz der mehreren Zeitschlitze empfangen wird, wobei das Verfahren die Schritte aufweist:
1) Bestimmen eines skalierten Rauschleistungsschätzwertes des in dem spezifischen Zeitschlitz empfangenen Signals;
2) Erfassen eines vorgegebenen Codes in dem in dem spezifischen Zeitschlitz empfangenen Signal;
3) Erzeugen eines Signalleistungsschätzwertes des Signals, das den erfassten Code enthält;
4) Erzeugen eines Bursterfassungssignals, wenn der Signalleistungsschätzwert größer ist als der skalierte Rauschsignalleistungsschätzwert; und
5) Decodieren des Empfangssignals des spezifischen Zeitschlitzes, wenn das Bursterfassungssignal erzeugt wird.

21. Verfahren nach Anspruch 20, ferner mit den Schritten:
6) Erzeugen von Codeinformation in Antwort auf das Bursterfassungssignal, wobei Schritt 5) auf die Codeinformation anspricht;
7) Erfassen eines TFCI- (Transportformatkombinationsindex) Signals im decodierten Empfangssignal;
8) Verifizieren, dass der spezifische Zeitschlitz Kanaldaten enthält; und
9) Erzeugen eines Überwachungssignals, wenn die Kanaldaten im spezifischen Zeitschlitz vorhanden sind.

22. Verfahren nach Anspruch 21, wobei die Codeinformation Kanalisierungscodes enthält.

23. Verfahren nach Anspruch 21 oder 22, wobei die Codeinformation Spreizcodes enthält.

24. Verfahren nach Anspruch 21, wobei die Schritte 1) bis 4) in Antwort auf das Überwachungssignal, und wenn der erfasste TFCI anzeigt, dass einer oder mehrere der mehreren Kanäle in dem spezifischen Zeitschlitz empfangen worden sind, beendet werden.

25. Verfahren nach Anspruch 24, wobei die Schritte 1) bis 4) fortgesetzt werden, wenn der erfasste TFCI anzeigt, dass keiner der mehreren Kanäle in dem spezifischen Zeitschlitz empfangen worden ist.

26. Verfahren nach Anspruch 20, wobei die mehreren Kanäle einem oder mehreren codierten kombinierten Transportkanälen (Coded Composite Transport Channels) CCTrCh zugeordnet sind, wobei dem Empfänger ein spezifischer CCTrCh zugewiesen ist.

27. Verfahren nach Anspruch 26, ferner mit den Schritten:
Erzeugen von Codeinformation in Antwort auf das Bursterfassungssignal, wobei Schritt 5) auf die Codeinformation anspricht;
Erfassen eines TFCI- (Transportformatkombinationsindex) Signals im decodierten Empfangssignal;
Verifizieren, dass der spezifische CCTrCh Kanaldaten enthält; und
Erzeugen eines Überwachungssignals, wenn die Kanaldaten im spezifischen CCTrCh vorhanden sind.

28. Verfahren nach Anspruch 27, wobei die Schritte 1) bis 4) in Antwort auf das Überwachungssignal, und wenn der erfasste TFCI anzeigt, dass einer oder mehrere der mehreren Kanäle in dem spezifischen CCTrCh empfangen worden sind, beendet werden.

29. Verfahren nach Anspruch 28, wobei die Schritte 1) bis 4) fortgesetzt werden, wenn der erfasste TFCI anzeigt, dass keiner der mehreren Kanäle in dem spezifischen CCTrCh empfangen worden ist.

30. Verfahren nach Anspruch 20, wobei Schritt 3) den Schritt zum Bestimmen des größten TFCI-Leistungsschätzwertes unter mehreren TFCI-Leistungsschätzwerten für mehrere TFCI-Wörter im empfangenen Signal aufweist, wobei der größte TFCI-Leistungsschätzwert der Signalleistungsschätzwert ist; und
wobei in Schritt 1) die mehreren TFCI-Leistungsschätzwerte verwendet werden, um den ausgewählten Rauschleistungsschätzwert zu erzeugen.

31. Verfahren nach Anspruch 20, wobei Schritt 3) die Schritte aufweist:
Bestimmen eines TFCI- (Transportformatkombinationsindex) Leistungsschätzwertes eines ausgewählten TCFI-Wortes im Empfangssignal:
Bestimmen eines Symbolleistungsschätzwertes des Empfangssignals; und
Kombinieren des TFCI-Leistungsschätzwertes mit dem Symbolleistungsschätzwert zum Erzeugen des Signalleistungsschätzwertes.

32. Verfahren nach Anspruch 20, wobei Schritt 3) die Schritte aufweist:
Erzeugen von Symbolentscheidungen;
Konjugieren der Symbolentscheidungen; und
Kombinieren der konjugierten Symbolentscheidungen mit dem erfassten vorgegebenen Code, um den Signalleistungsschätzwert zu erzuegen.

33. Verfahren nach Anspruch 20, wobei Schritt 1) den Schritt aufweist:
Erfassen eines nahezu orthogonalen Codes im Empfangssignal, wobei eine Größe des nahezu orthogonalen Codes der Rauschleistungsschätzwert ist;
wobei Schritt 3) den Schritt aufweist: Bestimmen eines größten TFCI-Leistungsschätzwertes unter mehreren TFCI-Leistungsschätzwerten für mehrere TFCI-Wörter im Empfangssignal, wobei der größte TFCI-Leistungsschätzwert der Signalleistungsschätzwert ist.

## Revendications

1. Récepteur (19) pour la réception de signaux de communication en trames de temps divisées en une pluralité de tranches temporelles, dans lequel chaque tranche temporelle peut comprendre des données pour une pluralité de canaux, ledit récepteur étant adapté pour détecter quand une tranche temporelle spécifique de ladite pluralité de tranches temporelles est reçue, ledit récepteur comprend un capteur de salve (10) comprenant :
un dispositif d'estimation de puissance de bruit (11) pour déterminer une estimation de puissance de bruit calibrée d'un signal reçu dans ladite tranche temporelle spécifique ;
un filtre adapté (12) pour détecter un code prédéterminé dans ledit signal reçu dans ladite tranche temporelle spécifique ;
un dispositif d'estimation de puissance de signal (13) en réponse audit filtre adapté, pour produire une estimation de la puissance de signal dudit signal comprenant ledit code détecté ; et
un comparateur (14) en réponse à ladite estimation de puissance de bruit et auxdits dispositifs d'estimation de puissance de signal, pour produire un signal de détection de salve quand ladite estimation de puissance de signal est plus grande que l'estimation de puissance de bruit calibrée ; ledit récepteur comprenant en outre ;
un dispositif d'estimation de données (2) pour décoder ledit signal reçu de ladite tranche temporelle spécifique quand ledit signal de détection de salve est produit.

2. Récepteur selon la revendication 1, dans lequel ledit dispositif d'estimation de données comprend :
un dispositif de détection de code (15) pour produire des informations de code en réponse audit signal de détection de salve ;
un premier décodeur (16) pour décoder ledit signal reçu en réponse auxdites informations de code reçues dudit dispositif de détection de code ; et
un décodeur (17) TFCI d'indication de combinaison de format de transport, couplé audit premier décodeur pour détecter un signal TFCI dans ledit signal reçu décodé.

3. Récepteur selon la revendication 2, dans lequel les informations de code comprennent des codes de channelisation.

4. Récepteur selon la revendication 2 ou 3, dans lequel les informations de code comprennent des codes d'étalement.

5. Récepteur selon la revendication 2, comprenant en outre un démultiplexeur (4) en réponse audit dispositif d'estimation de données (2) pour vérifier que ladite tranche temporelle spécifique comprend des données de canal et produit un signal de surveillance quand lesdites données de canal sont présentes.

6. Récepteur selon la revendication 5, dans lequel le capteur de salve (10) est disposé pour cesser la détection dudit signal reçu quand ledit signal de surveillance est produit et dudit signal TFCI indiquant qu'un canal ou plus de ladite pluralité de canaux a été reçu dans ladite tranche temporelle spécifique.

7. Récepteur selon la revendication 6, dans lequel le capteur de salve (10) est disposé pour continuer la détection dudit signal reçu quand ledit signal TFCI indique qu'aucun canal de ladite pluralité de canaux n'a été reçu dans ladite tranche temporelle spécifique.

8. Récepteur selon la revendication 1, dans lequel ladite pluralité de canaux est configurée de manière à ce qu'ils soient attribués à un canal CCTrCh de transport composite codé ou plus; un CCTrCh spécifique étant associé audit récepteur.

9. Récepteur selon la revendication 8, dans lequel le dispositif d'estimation de données (2) comprend :
un dispositif de détection de code (15) pour produire des informations de code en réponse audit signal de détection de salve ;
un premier décodeur (16) pour décoder ledit signal reçu en réponse auxdites informations de code reçues dudit dispositif de détection de code ; et
un décodeur (17) TFCI d'indication de combinaison de format de transport couplé audit premier décodeur pour détecter un signal TFCI dans ledit signal reçu décodé.

10. Récepteur selon la revendication 9, dans lequel les informations de code comprennent des codes de channelisation.

11. Récepteur selon la revendication 9 ou 10, dans lequel les informations de code comprennent des codes d'étalement.

12. Récepteur selon la revendication 9, comprenant en outre un démultiplexeur (4) en réponse au dispositif d'estimation de données (2) pour vérifier que ledit CCTrCh spécifique comprend des données de canal et pour produire un signal de surveillance quand lesdites données de canal sont présentes.

13. Récepteur selon la revendication 12, dans lequel le capteur de salve (10) est disposé pour cesser la détection dudit signal reçu quand ledit signal de surveillance est produit et dudit signal TFCI indiquant qu'un canal ou plus de ladite pluralité de canaux a été reçu dans ledit CCTrCh spécifique.

14. Récepteur selon la revendication 13, dans lequel le capteur de salve (10) est disposé pour continuer la détection dudit signal reçu quand ledit signal TFCI indique qu'aucun canal de ladite pluralité de canaux n'a été reçu dans ledit CCTrCh spécifique.

15. Récepteur selon la revendication 9, comprenant en outre une pluralité de capteurs de salve (10), chacun associé avec au moins un de la pluralité des CCTrCh pour la détection de la réception de plus d'un code.

16. Récepteur (19) pour la réception de signaux de communication en trames de temps divisées en une pluralité de tranches temporelles, dans lequel chaque tranche temporelle peut comprendre des données pour une pluralité de canaux, ledit récepteur étant adapté pour détecter quand une tranche temporelle spécifique de ladite pluralité de tranches temporelles est reçue, ledit récepteur comprenant un capteur de salve (10) comprenant :
un filtre adapté (51) pour détecter un code prédéterminé dans ledit signal reçu dans ladite tranche temporelle spécifique ;
un décodeur (50) TFCI d'indication de combinaison de format de transport préliminaire en réponse audit filtre adapté (51) pour déterminer les estimations de puissance TFCI pour chacun d'une pluralité de mots TFCI dans ledit signal reçu ; et
un dispositif d'estimation de puissance de bruit (53) pour déterminer une estimation de puissance de bruit calibrée dudit signal reçu dans ladite tranche temporelle spécifique en utilisant chacune desdites estimations de puissance TFCI;
ledit décodeur TFCI préliminaire étant disposé pour effectuer l'estimation de puissance de signal en utilisant une des plus grandes estimations de puissance TFCI pour produire ladite estimation de puissance TFCI ; et
un comparateur (54) en réponse à ladite estimation de puissance de bruit et auxdits dispositifs d'estimation de puissance de signal, pour produire un signal de détection de salve quand ladite estimation de puissance de signal est plus grande que l'estimation de puissance de bruit calibrée ; ledit récepteur comprenant en outre :
un dispositif d'estimation de données (2) pour décoder ledit signal reçu de ladite tranche temporelle spécifique quand ledit signal de détection de salve est produit.

17. Récepteur selon la revendication 1, dans lequel le dispositif d'estimation de puissance de signal (13) comprend :
un décodeur (73) TFCI d'indication de combinaison de format de transport pour déterminer une estimation de puissance TFCI d'un mot choisi TFCI dans ledit signal reçu ;
une boucle de retour de décision (75) pour déterminer une estimation de puissance de symbole dudit signal reçu, comprenant :
un démodulateur (76) pour produire des décisions de symbole ;
un conjugueur (77) couplé audit démodulateur pour conjuguer lesdites décisions de symbole ; et
un estimateur de puissance de symbole (78) en réponse auxdites décisions de symbole conjuguées et aux sorties dudit filtre adapté pour produire une estimation de puissance de symbole ; et
ladite estimation de puissance de signal étant l'association de ladite estimation de puissance TFCI et de ladite estimation de puissance de symbole.

18. Récepteur selon la revendication 1, dans lequel ledit dispositif d'estimation de puissance de signal (13) comprend une boucle de retour de décision (85) pour déterminer une estimation de puissance de symbole dudit signal reçu, comprenant :
un démodulateur (86) pour produire des décisions de symbole ;
un conjugueur (87) couplé audit démodulateur pour conjuguer lesdites décisions de symbole ; et
un estimateur de puissance de symbole (88) en réponse auxdites décisions de symbole conjuguées et aux sorties dudit filtre adapté pour produire une estimation de puissance de symbole ; et
ladite estimation de puissance de signal étant l'estimation de puissance de symbole.

19. Récepteur selon la revendication 1, dans lequel ledit dispositif d'estimation de puissance de bruit (11) est un filtre adapté (92) pour détecter un code presque orthogonal dans ledit signal reçu, une amplitude dudit code presque orthogonal détecté étant ladite estimation de puissance de bruit calibrée ;
ledit dispositif d'estimation de puissance de signal étant un décodeur (93) d'indication de combinaison de format de transport, pour déterminer une estimation de puissance TFCI d'un mot choisi TFCI dans ledit signal reçu ; et
ladite estimation de puissance TFCI étant ladite estimation de puissance de signal.

20. Procédé de surveillance de signaux de communication en trames de temps divisées en une pluralité de tranches temporelles dans un récepteur, dans lequel chaque tranche temporelle peut comprendre des données pour une pluralité de canaux, et détecter quand une tranche temporelle spécifique de ladite pluralité de tranches temporelles est reçue, ledit procédé comprenant les étapes consistant à :
1) déterminer une estimation de puissance de bruit calibrée d'un signal reçu dans ladite tranche temporelle spécifique ;
2) détecter un code prédéterminé dans ledit signal reçu dans ladite tranche temporelle spécifique ;
3) produire une estimation de la puissance de signal dudit signal comprenant ledit code détecté ;
4) produire un signal de détection de salve quand ladite estimation de puissance de signal est plus grande que l'estimation de puissance de bruit calibrée ; et
5) décoder ledit signal reçu de ladite tranche temporelle spécifique quand ledit signal de détection de salve est produit.

21. Procédé selon la revendication 20, comprenant en outre les étapes consistant à :
6) produire des informations de code en réponse audit signal de détection de salve dans lequel l'étape 5) est une réponse auxdites informations de code ;
7) détecter un signal TFCI d'indication de combinaison de format de transport dans ledit signal reçu décodé ;
8) vérifier que lesdites tranches temporelles spécifiques comprennent des données de canal ; et
9) produire un signal de surveillance quand lesdites données de canal sont présentes dans ladite tranche temporelle spécifique.

22. Procédé selon la revendication 21, dans lequel les informations de code comprennent des codes de channelisation.

23. Procédé selon la revendication 21 ou 22, dans lequel les informations de code comprennent des codes d'étalement.

24. Procédé selon la revendication 21, dans lequel lesdites étapes 1) - 4) cessent en réponse audit signal de surveillance et audit TFCI détecté indiquant qu'un canal ou plus de ladite pluralité de canaux a été reçu dans ladite tranche temporelle spécifique.

25. Procédé selon la revendication 24, dans lequel lesdites étapes 1) - 4) continuent quand ledit TFCI détecté indique qu'aucun canal de ladite pluralité de canaux n'a été reçu dans ladite tranche temporelle spécifique.

26. Procédé selon la revendication 20, dans lequel ladite pluralité de canaux est attribuée à un canal de transport composite codé CCTrCh ou plus, un CCTrCh spécifique étant associé audit récepteur.

27. Procédé selon la revendication 26, comprenant en outre les étapes consistant à :
produire des informations de code en réponse audit signal de détection de salve dans lequel l'étape 5) est en réponse auxdites informations de code ;
détecter un signal TFCI d'indication de combinaison de format de transport dans ledit signal reçu décodé ;
vérifier que ledit CCTrCh spécifique comprend des données de canal ; et
produire un signal de surveillance quand lesdites données de canal sont présentes dans ledit CCTrCh spécifique.

28. Procédé selon la revendication 27, dans lequel lesdites étapes 1) - 4) cessent en réponse audit signal de surveillance et audit TFCI indiquant qu'un canal ou plus de ladite pluralité de canaux a été reçu dans ledit CCTrCh spécifique.

29. Procédé selon la revendication 28, dans lequel lesdites étapes 1) - 4) continuent quand ledit TFCI indique qu'aucun canal de ladite pluralité de canaux n'a été reçu dans ledit CCTrCh spécifique.

30. Procédé selon la revendication 20, dans lequel l'étape 3) comprend les étapes consistant à déterminer une des plus grandes estimations de puissance TFCI parmi une pluralité d'estimations de puissance TFCI pour une pluralité de mots TFCI dans ledit signal reçu, ladite plus grande estimation de puissance TFCI étant ladite estimation de puissance de bruit calibrée ;
ladite étape 1) utilise ladite pluralité d'estimations de puissance TFCI pour produire ladite estimation de puissance de bruit calibrée.

31. Procédé selon la revendication 20, dans lequel l'étape 3) comprend les étapes consistant à :
déterminer une estimation de puissance d'indication de combinaison de format de transport TFCI d'un mot choisi TFCI dans ledit signal reçu ;
déterminer une estimation de puissance de symbole dudit signal reçu ; et
associer ladite estimation de puissance TFCI avec ladite estimation de puissance de symbole pour produire ladite estimation de puissance de signal.

32. Procédé selon la revendication 20, dans lequel l'étape 3) comprend les étapes consistant à :
produire des décisions de symbole ;
conjuguer lesdites décisions de symbole ; et
associer lesdites décisions de symbole conjuguées et lesdits code prédéterminés détectés pour produire une estimation de puissance de symbole.

33. Procédé selon la revendication 20, dans lequel l'étape 1) comprend l'étape consistant à détecter un code presque orthogonal dans ledit signal reçu, une amplitude dudit code presque orthogonal étant l'estimation de puissance de bruit;
ladite étape 3) comprenant les étapes consistant à déterminer une des plus grandes estimations de puissance TFCI parmi une pluralité d'estimations de puissance TFCI pour une pluralité de mots TFCI dans ledit signal reçu, ladite plus grande estimation de puissance TFCI étant ladite estimation de puissance de signal.
